Europäisches Patentamt

European Patent Office

Office européen des brevets

(11) Publication number: **0 173 410**
A1

# EUROPEAN PATENT APPLICATION

(21) Application number: **85303252.2**

(22) Date of filing: **08.05.85**

(51) Int. Cl.⁴: **A 01 N 25/24,** A 01 N 25/10,
A 01 N 37/02, A 01 N 37/44,
A 01 N 43/16, A 01 N 59/06

(30) Priority: **09.05.84 GB 8411726**
**02.10.84 GB 8424872**

(43) Date of publication of application: **05.03.86**
**Bulletin 86/10**

(84) Designated Contracting States: **AT BE CH DE FR GB IT LI LU NL SE**

(71) Applicant: **Sampson, Michael James, 18 Christchurch Road Norwich, Norfolk (GB)**
Applicant: **Hutchings, Neville, The Station, Edwinstowe Mansfield Nottinghamshire NG21 9HT (GB)**

(72) Inventor: **Sampson, Michael James, 18 Christchurch Road Norwich, Norfolk (GB)**
Inventor: **Hutchings, Neville, The Station, Edwinstowe Mansfield Nottinghamshire NG21 9HT (GB)**

(74) Representative: **Crampton, Keith John Allen et al, D YOUNG & CO 10 Staple Inn, London WC1V 7RD (GB)**

(54) **Repellent for birds and other creatures.**

(57) A composition for repelling birds and other creatures comprises a repellent known per se in association with a terpene or terpene polymer, whereby the efficacy of the repellent is substantially increased. A terpene or terpene polymer is applied to growing crops or other material in conjunction with a known repellent in order to minimize or avoid damage by birds and other creatures.

0173410

1

## REPELLENT FOR BIRDS AND OTHER CREATURES

This invention relates to repellent materials, primarily for use in agriculture and horticulture.

U.K. Patent GB-A-1 291 432 discloses that the application to plants of certain aluminium compounds, e.g. aluminium ammonium sulphate at around 25kg per hectare, in association with certain organic compounds and/or plant extracts, deters many creatures from nibbling, pecking or otherwise attacking the plants. Aluminium ammonium sulphate has previously been used with certain coating agents which, although having some effect on persistence, have none on the initial activity and hence on the rate of addition required.

2,2-Dichloropropionic acid, which has been widely used as a herbicide for at least twenty years, has been known to also have some bird repellency, which is not uncommon in agricultural chemicals. However, it has never been a candidate product for bird or animal control because its effect is both weak and unpredictable.

Our own prior European, U.K. and U.S. Patent Specifications EP-B-0 027 344, GB-B-2 063 235 and US-A-4 447 984, which correspond to one another, disclose the use of certain terpenes and their polymers and other derivatives in preventing pod shatter in such plants as peas, beans and oilseed rape. U.K. Patent Specification GB-A-2 057 265 discloses the use of certain such terpenes as coating agents in enhancing the efficacy of various agricultural additives. The preferred terpene comprises di-1-p-menthene and its polymers.

It has now been discovered that such coating agents, particularly di-1-p-menthene and α and β pinenes and their polymers, are of value in combination with aluminium ammonium sulphate and dalapon (which term will be used herein to mean 2,2-dichloropropionic acid and its salts, e.g. the magnesium salt) to control and repel birds and animals.

In accordance with the present invention, a bird-repellent composition comprises a bird repellent known per se in association with a terpene or terpene polymer, whereby the efficacy of the bird repellent is

substantially increased. Di-1-p-menthene and its polymers are especially valuable as the terpene compound. Also in accordance with the present invention, a terpene or terpene polymer is applied, preferably by spraying, to growing crops or other material in conjunction with a known bird repellent in order to minimize or avoid damage by birds.

Used in combination with terpene-derived coating agents, aluminium ammonium sulphate can produce far better control, which is not only of immediate effect but also much longer lasting, even when used at only 2.5kg (instead of 25kg) per hectare. Thus, it can even repel pigeons that had been allowed to commence grazing on oilseed rape before spraying. Other salts of aluminium that may be used include aluminium sulphate and aluminium chloride. Moreover, any of the aluminium salts used in conjunction with the terpene-based coating materials described herein will control molluscs such as slugs.

Moreover dalapon, when used in conjunction with the terpene-based coating materials, can be used to give a high and persistent level of bird repellency.

Dalapon and aluminium ammonium sulphate may be used in conjunction with coating agents in accordance with the present invention to increase bird control activity and to combine this with weed control. They may be used in combination or in sequence.

Other bird repellents including anthroquinone may be used in conjunction with the terpene-based coating materials. They may be used in combination with dalapon or with aluminium ammonium sulphate, or with a mixture of these two.

In another aspect of the present invention the terpene-based coating materials may be beneficially used in conjunction with insect repellents normally used to treat skin or clothing in humans or to treat animals. Examples of such insect repellents are diethyltoluamide, dimethyl phthalate and dibutyl phthalate. Such substances, which show marked volatility, have not been used to control insect pests on crop plants. They may be so used in conjunction with a coating agent.

Almost all crop plants are susceptible to bird damage at some stage between planting and harvesting whilst post-harvest materials such as grain are also highly susceptible to attack. All crops (including fruit trees) may be treated with aluminium ammonium sulphate although certain crops would be damaged by some rates of dalapon.

The coating materials applied with dalapon and aluminium ammonium sulphate all exhibit a very low toxicity to mammals and other wildlife and are therefore particularly suitable where the crop must be treated close to harvest.

Among the known bird and animal repellents that may be beneficially synergized by their use with the terpene materials in accordance with the invention are, apart from those already mentioned, denatonium saccharide; denatonium benzoate, whose systematic name is benzyldiethyl(2,6-xylylcarbamoylmethyl)ammonium benzoate; sucrose octa-acetate; 9,10-dioxoanthracene; N,N-dimethyl-m-toluamide; butopyronoxyl; melianotroil; extracts of Melia azedarach L.; extracts of Melia azadirachta L.; margosa oil; nim oil; nimbidin; absinthin; absinthium; extracts of Artemision absinthium L.; brucine; Centaury, (American, Chilean or Minor); chirata; choline dihydrogen citrate; cimicifuga; colocynth; gentian; dried parts of Gentiana lutea L.; magnesium lactate; naringin; pine oil; quassia; quassin; extract of Quassia amara L.; quinacrine hydrochloride; quinine; sodium cresotate; sulphur; turmeric; zinc acetate; zinc sulphate; aluminium phosphate; aluminium ammonium phosphate and other aluminium salts.

Such substances may be used singly or in combination. Typical rates are from 1 to 10,000 g. per hectare of treated crops, applied typically in 20 to 500 litres of water per hectare.

In another aspect of the invention concentrated spray may be used to treat sacks, packaging, plastics fittings and woodwork against attack by rats and mice, or to protect tree trunks and stems from attack by animals such as deer and rabbits.

The terpene-based coating materials themselves exhibit a degree of bird and animal repellency. Since very little is known of the mechanism of repellency in birds and other animals it is possible that, while the repellency displayed by the terpene-based coating materials is low, it acts to synergize the (also relatively low) repellency of dalapon and of aluminium ammonium sulphate. This may explain why the repellency obtained is so much greater than that achieved with coating materials that do not exhibit repellency when used in conjunction with dalapon and aluminium ammonium sulphate.

The preferred combinations are dalapon and/or aluminium ammonium sulphate with di-l-p-menthene and/or its polymers, with the optional addition of denatonium benzoate or saccharide and/or sucrose octa-acetate.

4

The denatonium compounds can be used with a terpene to give fairly good results in the absence of any other active ingredient.

Among suitable formulations are the following. The quantities given are in rates per hectare when used on a crop. Each of them is applied in conjunction with 500 ml of di-1-p-menthene and 50 ml of an alkylphenol ethylene oxide condensate, which is a surfactant.

1. Dalapon, 2kg

2. Dalapon, 2kg + sucrose octa-acetate, 100g.

3. Dalapon, 2kg + sucrose octa-acetate, 100g. + denatonium benzoate, 5.0g.

4. Dalapon, 1.5kg + aluminium ammonium sulphate, 1.0kg

5. Dalapon, 1.5kg + aluminium ammonium sulphate, 1.0kg + sucrose octa-acetate, 100g.

6. Aluminium ammonium sulphate, 10kg

7. Aluminium ammonium sulphate, 5kg + sucrose octa-acetate, 100 g. + denatonium benzoate, 5g.

8. Sucrose octa-acetate, 200g. + denatonium benzoate, 5g.

In order to assess damage by pigeons, different parts of a crop of Jet Neuf oilseed rape were sprayed with the compositions listed below. Pigeon damage was compared with that on plants protected by netting, and assessed from 0 (maximum damage) to 10 (netting-protected, nil damage). The amounts of the ingredients in g/l and a key to the abbreviations in the table are as follows:

| | | |
|---|---|---|
| DAL | Dalapon (Dow chemicals) | 7.5 |
| SUC | Sucrose octa-acetate | 0.5 |
| DEN | Denatonium benzoate | 0.125 |
| ALU | Aluminium ammonium sulphate | 15.0 |

These quantities were used whether the compounds were used singly or in combination. The amount of di-1-p-menthene, when used, was 0.5% by volume in the final spray; all sprays included 2 cc/l of alkylphenyl ethylene oxide condensate surfactant. Spraying took place on 20 November in England and the assessment was made on 20 December.

5

|  | Di-1-p-menthene | |
|---|---|---|
|  | present | absent |
| DAL | 8 | 3 |
| SUC | 5 | 1 |
| DAL + SUC | 10 | 3 |
| ALU | 5 | 1 |
| ALU + SUC | 7 | 2 |
| DEN | 5 | 1 |
| ALU + SUC + DEN | 9 | 4 |
| control (surfactant only) | 0 | 0 |

These results show that addition of di-1-p-menthene substantially improves the bird repellency obtained with a conventional repellent used above in similar quantities.

## CLAIMS

1.    A composition for repelling birds or other creatures and containing a known repellent, characterized in that it also includes a terpene and/or terpene polymer.

2.    A composition as claimed in Claim 1 in which the terpene compound is di-1-p-menthene and/or its polymers.

3.    A composition as claimed in Claim 1 or 2 in which the repellent comprises dalapon, i.e. 2,2-dichloropropionic acid or a salt thereof.

4.    A composition as claimed in any preceding claim in which the repellent comprises aluminium ammonium sulphate.

5.    A composition as claimed in any preceding claim in which the repellent comprises denatonium benzoate or saccharide and/or sucrose octa-acetate.

6.    A method of reducing or eliminating damage to growing crops or to another region where damage by birds or other creatures is expected, in which a known repellent is applied to the crop or region, characterized in that the repellent is applied in conjunction with a terpene and/or terpene polymer.

7.    A method as claimed in Claim 6 in which the terpene compound is di-1-p-menthene and/or its polymers.

8.    A method as claimed in Claim 6 or 7 in which the repellent is one or more of dalapon, aluminium ammonium sulphate, denatonium benzoate, denatonium saccharide and sucrose octa-acetate.

9.    A method as claimed in any one of Claims 6 to 8 in which the repellent used is aluminium ammonium sulphate and the amount used is 2.5kg/hectare on growing crops.

10. A method as claimed in Claim 8 in which the repellent is a bird repellent applied to growing crops and is aluminium ammonium sulphate used at about 15 g/l, dalapon used at about 7.5 g/l, sucrose octa-acetate used at about 0.5 g/l and/or denatonium benzoate used at about 0.125 g/l.

0173410

European Patent Office

# EUROPEAN SEARCH REPORT

Application number

EP 85 30 3252

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 592 910 (A.R. CLARK et al.) <br> * Column 11, lines 21-24 * | 1-2,6-7 | A 01 N 25/24 <br> A 01 N 25/10 <br> A 01 N 37/02 <br> A 01 N 37/44 <br> A 01 N 43/16 <br> A 01 N 59/06 |
| Y | | 4-5,8,10 | |
| Y,D | GB-A-1 291 432 (R.J. STONE) <br><br> * Claims 1-4,15-16 * | 4-5,8-10 | |
| A | WO-A-8 002 360 (M.J. SAMPSON) <br> * Claims 1,3 * | 1-2 | |

TECHNICAL FIELDS SEARCHED (Int. Cl.4)

A 01 N

The present search report has been drawn up for all claims

| Place of search | Date of completion of the search | Examiner |
|---|---|---|
| THE HAGUE | 28-08-1985 | DECORTE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82